# EUROPÄISCHE PATENTSCHRIFT

(11) **EP 1 895 791 B1**
(45) Veröffentlichungstag und Bekanntmachung des Hinweises auf die Patenterteilung: **25.12.2019**
(21) Anmeldenummer: 07016508.9
(22) Anmeldetag: 23.08.2007
(51) Int. Cl.: H04W 12/06, H04W 84/04, H04W 88/02

(54) **Individualisierung von Mobilfunkteilnehmer-Identifikations-Modulen**
Individualisation of cellular phone subscriber identification modules
Individualisation de modules d'identification d'abonnés au service radiophonique mobile

(30) Priorität: 28.08.2006 DE 102006040086
(43) Veröffentlichungstag der Anmeldung: 05.03.2008
(73) Patentinhaber: Vodafone Holding GmbH, 40213 Düsseldorf (DE)
(72) Erfinder: Trapp, Harald, 42489 Wülfrath (DE)
(74) Vertreter: Weisbrodt, Bernd

(56) Entgegenhaltungen:
- EP-A- 1 009 181
- WO-A-94/08433
- WO-A-03/077585
- WO-A-2005/036905

## Beschreibung

Die vorliegende Erfindung betrifft ein Verfahren zur Individualisierung von einem in einem Mobilfunknetz betreibbaren mobilen Endgerät einen einen Mobilfunkteilnehmer im Mobilfunknetz authentifizierenden Zugang zum Mobilfunknetz ermöglichenden kartenförmigen Mobilfunkteilnehmer-Identifikations-Modulen (SIM-Karten; SIM: Subscriber Identity Module), wobei dem Mobilfunkteilnehmer im Mobilfunknetz wenigstens zwei oder mehr kartenförmige Mobilfunkteilnehmer-Identifikations-Module (SIM-Karten) mit identischen Inhalten zugeordnet sind, von denen während deckungsgleicher Zeiteinheiten nur eine einen Zugang zum Mobilfunknetz erhält.

Ferner betrifft die vorliegende Erfindung ein Mobilfunknetz mit einer aus Funkzellen aufgebauten zellularen Netzstruktur und darin betreibbaren mobilen Endgeräten, vorzugsweise gemäß dem GSM- und/oder UMTS-Funknetzstandard, bei dem die das Mobilfunknetz ausbildenden Einrichtungen und/oder die von diesen genutzten Einrichtungen zur Ausführung eines erfindungsgemäßen Verfahrens ausgebildet sind.

Gegenstand der vorliegenden Erfindung sind ferner ein mobiles Endgerät zum Betrieb in einem Mobilfunknetz, insbesondere Mobilfunktelefon, und ein Mobilfunkteilnehmer-Identifikations-Modul (SIM-Karte) zur Nutzung in einem in einem Mobilfunknetz betreibbaren mobilen Endgerät, vorzugsweise gemäß dem GSM- und/oder UMTS-Funknetzstandard, welche zur Ausführung eines erfindungsgemäßen Verfahrens ausgebildet sind.

Einem in einem Mobilfunknetz betreibbaren mobilen Endgerät einen einen Mobilfunkteilnehmer im Mobilfunknetz authentifizierenden Zugang zum Mobilfunknetz ermöglichende kartenförmige Mobilfunkteilnehmer-Identifikations-Module (SIM-Karten), wobei einem Mobilfunkteilnehmer im Mobilfunknetz wenigstens zwei oder mehr kartenförmige Mobilfunkteilnehmer-Identifikations-Module (SIM-Karten) mit identischen Inhalten zugeordnet sind, von denen während deckungsgleicher Zeiteinheiten nur eine einen Zugang zum Mobilfunknetz erhält, sind im Stand der Technik bekannt, beispielsweise als sogenannte Twin- oder Tri-SIM-Sets (vergleiche beispielsweise EP 0 669 774 B1).

Die einzelnen Mobilfunkteilnehmer-Identifikations-Module (SIM-Karten) sind bei entsprechenden Twin- oder Tri-SIM-Sets mobilfunknetzseitig aufgrund ihrer identischen Inhalte, auch geklonte Struktur genannt, nicht voneinander zu unterscheiden. Dies führt mitunter dazu, dass mobilfunknetzseitig nicht eindeutig erfasst werden kann, ob das jeweils von dem Mobilfunkteilnehmer genutzte kartenförmige Mobilfunkteilnehmer-Identifikations-Modul (SIM-Karte) den dem Mobilfunkteilnehmer und/oder dem von diesem genutzten mobilen Endgerät im Mobilfunknetz zur Verfügung stehenden Diensten und/oder Funktionalitäten des Mobilfunknetzes genügt beziehungsweise auf dem neusten Stand des Mobilfunknetzes ist. Dementsprechend sind mobilfunknetzseitig gegebene Aktualisierungen, beispielsweise hinsichtlich der dem Mobilfunkteilnehmer im Mobilfunknetz zur Verfügung stehenden Diensten und/oder Funktionalitäten des Mobilfunknetzes, wie Abrechnungsinformationen für Roaming, Diensteprofilen in Abhängigkeit von für den Mobilfunkteilnehmer im Mobilfunknetz eingerichteten Vorzugsgebieten und/oder dergleichen Betriebsparametern, nicht feststellbar. Dies ist oftmals unbefriedigend für die Mobilfunkteilnehmer und führt dazu, dass diese von einer Nutzung entsprechender Twin- oder Tri-SIM-Sets absehen.

Die WO 94/08433 A1 offenbart ein digitales Mobilkommunikationssystem umfassend eine Vermittlungszentrale, ein damit verbundenes Teilnehmerverzeichnis, mobile Endgeräte und teilnehmergebundene Teilnehmerkarten. Jedem Abonnement wird eine Teilnehmernummer und mindestens zwei Teilnehmerkarten zugeordnet, die aktiviert werden können, um ein mobiles Endgerät sowohl für eingehenden als auch für ausgehenden Verkehr zu öffnen, wenn es darin eingesetzt wird. Wenn eine der Karten des Teilnehmers aktiviert wird, werden die anderen Karten notwendigerweise deaktiviert, um ein mobiles Endgerät nur für ausgehenden Verkehr zu öffnen, wenn es darin eingesetzt ist. Das Teilnehmerverzeichnis ist angepasst, um die Aktivierung und Deaktivierung der Karten im Auftrag des Teilnehmers zu steuern.

Die WO 2005/036905 A2 offenbart ein Verfahren und ein System zur Ansteuerung einer Anordnung von zwei oder mehrere Endgeräte umfassenden Konfiguration von Telekommunikationsendgeräten in einem öffentlichen Telekommunikationsnetz. Dabei werden die einem ersten Endgerät bzw. einem an dem ersten Endgerät angeschlossenen Identifikations-Chip zugeordneten Leistungsmerkmale des öffentlichen Telekommunikationsnetzes in einer Weise aktiviert, dass Änderungen der Leistungsmerkmale zeitgleich oder mit zeitlicher Verzögerung auch bei den weiteren Endgeräten bzw. an dem jeweiligen weiteren Endgerät angeschlossenen Identifikations-Chip der Mehrgerätekonfiguration wirksam werden.

Die WO 2003/077585 A1 betrifft ein Identitätsmodul, welches folgendermaßen aktiviert wird: ein Anpassungszentrum speichert einen anfänglichen Identitätscode in dem Identitätsmodul und übermittelt den anfänglichen Identitätscode an ein Netzwerkmanagementsystem, ein Verteiler weist dem Identitätsmodul eine Kommunikationsadresse zu und übermittelt die Kommunikationsadresse zusammen mit dem anfänglichen Identitätscode an das Netzwerkmanagementsystem, das Identitätsmodul kontaktiert das Netzwerkmanagementsystem über eine Kommunikationsvorrichtung, wobei das Netzwerkmanagementsystem den anfänglichen Identitätscode zusammen mit der Kommunikationsadresse erhält, und das Netzwerkmanagementsystem erkennt den anfänglichen Identitätscode zusammen mit der Kommunikationsadresse und weist dem Identitätsmodul daraufhin einen effektiven Identitätscode zu.

Die EP 1 009 181 A1 betrifft ein Verfahren zum Freischalten einer SIM-Karte eines Mobiltelefons für einen Mobilfunk-Kunden für ein eingestelltes Leistungsmerkmal oder zum Ändern eines Leistungsmerkmals, für welches die SIM-Karte freigeschaltet ist.

Der Erfindung liegt in Anbetracht dieses Standes der Technik die Aufgabe zugrunde, auf einfache und kostengünstige Art und Weise und insbesondere ohne Änderungen an der Struktur und dem Aufbau sowie der Funktionsweise von existierenden kartenförmigen Mobilfunkteilnehmer-Identifikations-Modulen eine Individualisierung derselben zu ermöglichen.

Die Erfindung ist durch die anhängenden Ansprüche bestimmt. Zur technischen Lösung wird mit der vorliegenden Erfindung ein Verfahren zur Individualisierung von Mobilfunkteilnehmer-Identifikations-Modulen (SIM), welche einem in einem Mobilfunknetz betreibbaren mobilen Endgerät einen einen Mobilfunkteilnehmer im Mobilfunknetz authentifizierenden Zugang zum Mobilfunknetz ermöglichen, wobei dem Mobilfunkteilnehmer im Mobilfunknetz wenigstens zwei oder mehr mobilfunknetzseitig nicht voneinander unterscheidbare Mobilfunkteilnehmer-Identifikations-Module mit identischen Inhalten zugeordnet sind, von denen während deckungsgleicher Zeiteinheiten nur eine einen Zugang zum Mobilfunknetz erhält, vorgeschlagen, wobei die Mobilfunkteilnehmer-Identifikations-Module seitens des mobilen Endgerätes jeweils mit wenigstens einer Kennung versehen werden, welche zumindest mobilfunknetzseitig eine unterscheidbare Identifizierung der jeweiligen Mobilfunkteilnehmer-Identifikations-Module ermöglicht, wobei die Kennung eines Mobilfunkteilnehmer-Identifikations-Moduls von dem diese nutzenden mobilen Endgerät mittels einer Nachricht eines Nachrichtendienstes des Mobilfunknetzes an das Mobilfunknetz übertragen wird, wobei die von dem mobilen Endgerät an das Mobilfunknetz übertragene Kennung mobilfunknetzseitig wenigstens einem Vergleich mit wenigstens einer der in einer mobilfunknetzseitigen Datenbank bereits erfassten und verwalteten Kennungen des Mobilfunkteilnehmers unterzogen wird.

Der Erfindung liegt die Erkenntnis zugrunde, dass durch Versehen der Mobilfunkteilnehmer-Identifikations-Module mit wenigstens einer eine unterscheidbare Identifizierung ermöglichenden Kennung eine Individualisierung von ansonsten identischen Mobilfunkteilnehmer-Identifikations-Modulen auf einfache und kostengünstige Art und Weise erzielbar ist.

Vorteilhafterweise wird die Kennung seitens einer Speicherstelle eines Mobilfunkteilnehmer-Identifikations-Moduls als Inhalt der Speicherstelle erfasst.

In einer weiteren vorteilhaften Ausgestaltung der Erfindung werden die Kennungen der dem Mobilfunkteilnehmer zugeordneten Mobilfunkteilnehmer-Identifikations-Module in wenigstens einer mobilfunknetzseitigen Datenbank erfasst und verwaltet. Durch diese Ausgestaltung wird sichergestellt, dass zumindest mobilfunknetzseitig eine Identifizierung des von dem Mobilfunkteilnehmer jeweils aktuell genutzten Mobilfunkteilnehmer-Identifikations-Moduls ermöglicht ist.

Gemäß einem weiteren vorteilhaften Vorschlag der Erfindung ist die Gesamtanzahl der dem Mobilfunkteilnehmer zugeordneten Mobilfunkteilnehmer-Identifikations-Module Bestandteil der jeweiligen Kennung eines Mobilfunkteilnehmer-Identifikations-Moduls oder zumindest aus dieser ermittelbar. Erfindungsgemäß ist so anhand der Kennung feststellbar, wie viele Mobilfunkteilnehmer-Identifikations-Module einem Mobilfunkteilnehmer zugeordnet sind. Mobilfunknetzseitig kann so im Falle von Aktualisierungen erfasst werden, ob eine Mobilfunkteilnehmer zugeordnete Mobilfunkteilnehmer-Identifikations-Module weiter aktualisiert werden müssen. Mobilfunknetzseitig wird dabei erfasst, dass zu dem Mobilfunkteilnehmer noch weitere Mobilfunkteilnehmer-Identifikations-Module existieren, die noch nicht aktualisiert sind.

Eine weitere vorteilhafte Ausgestaltung der Erfindung sieht vor, die Gesamtanzahl der dem Mobilfunkteilnehmer zugeordneten Mobilfunkteilnehmer-Identifikations-Module auf dem jeweiligen Mobilfunkteilnehmer-Identifikations-Modul, vorzugsweise seitens der die Kennung als Inhalt erfassenden Speicherstelle des Mobilfunkteilnehmer-Identifikations-Moduls, und/oder seitens wenigstens einer mobilfunknetzseitigen Datenbank erfasst ist, vorzugsweise im Rahmen der Herstellung der Mobilfunkteilnehmer-Identifikations-Module.

Vorteilhafterweise wird die Kennung eines Mobilfunkteilnehmer-Identifikations-Moduls von dem diese nutzenden mobilen Endgerät mittels einer Nachricht eines Nachrichtendienstes des Mobilfunknetzes an das Mobilfunknetz übertragen, vorzugsweise an eine die wenigstens eine mobilfunknetzseitige Datenbank nutzende Recheneinrichtung des Mobilfunknetzes. Eine vorteilhafte Ausgestaltung der Erfindung sieht vor, dass die Übertragung der Kennung durch eine seitens des mobilen Endgerätes und/oder eine seitens des Mobilfunkteilnehmer-Identifikations-Moduls ausführbare Anwendung des Mobilfunkteilnehmer-Identifikations-Moduls initiiert wird. Eine besonders bevorzugte Ausgestaltung der Erfindung sieht dabei vor, dass das Mobilfunkteilnehmer-Identifikations-Modul als eine ein sogenanntes Applet ausführende SIM-Karte ausgebildet ist.

In einer weiteren vorteilhaften Ausgestaltung der Erfindung wird die Übertragung der Kennung endgeräteseitig initiiert, vorzugsweise automatisch, besonders bevorzugt beim Einschalten des mobilen Endgerätes oder beim Anmelden des mobilen Endgerätes beim beziehungsweise in dem Mobilfunknetz, und/oder manuell durch wenigstens eine Betätigungseingabe seitens des mobilen Endgerätes. Eine entsprechende Betätigungseingabe kann dabei durch Betätigung von Tasten seitens des mobilen Endgerätes und/oder durch Spracheingabe seitens des mobilen Endgerätes erfolgen. Die endgeräteseitige Initiierung der Übertragung der Kennung ermöglicht vorteilhafterweise eine den individuellen Bedürfnissen des Mobilfunkteilnehmers gerecht werdende Aktualisierung des Mobilfunkteilnehmer-Identifikations-Moduls.

Eine weitere vorteilhafte Ausgestaltung der Erfindung sieht vor, dass die Übertragung der Kennung mobilfunknetzseitig initiiert wird, vorzugsweise mittels einer von dem Mobilfunknetz an das mobile Endgerät übertragenen Nachricht eines Nachrichtendienstes des Mobilfunknetzes. Als Nachricht eines Nachrichtendienstes des Mobilfunknetzes wird in einer bevorzugten Ausgestaltung der Erfindung vorteilhafterweise eine sogenannte SMS verwendet. Durch die mobilfunknetzseitige Initiierung der Übertragung der Kennung ist die Möglichkeit geschaffen, vom Mobilfunknetz her durch Starten einer entsprechenden seitens des Mobilfunkteilnehmer-Identifikations-Moduls ausführbaren Anwendung, vorzugsweise einem sogenannten Applet, eine Aktualisierung des Mobilfunkteilnehmer-Identifikations-Moduls vornehmen zu können, beispielsweise hinsichtlich der dem Mobilfunkteilnehmer im Mobilfunknetz zur Verfügung stehenden Diensten und/oder Funktionalitäten des Mobilfunknetzes, die Abrechnungsinformationen für Roaming, Diensteprofilen in Abhängigkeit von für den Mobilfunkteilnehmer im Mobilfunknetz eingerichteten Vorzugsgebieten, insbesondere hinsichtlich in diesen zur Verfügung stehenden Diensten und/oder Abrechnungsparametern.

Eine weitere besonders vorteilhafte Ausgestaltung der Erfindung sieht vor, dass die von dem mobilen Endgerät an das Mobilfunknetz übertragene Kennung mobilfunknetzseitig wenigstens einem Vergleich mit wenigstens einer der in der mobilfunknetzseitigen Datenbank erfassten und verwalteten Kennungen unterzogen wird, vorzugsweise seitens einer die wenigstens eine mobilfunknetzseitige Datenbank nutzenden Recheneinrichtung des Mobilfunknetzes. Vorteilhafterweise wird in Abhängigkeit von dem Ergebnis des wenigstens einen Vergleichs die Kennung des Mobilfunkteilnehmer-Identifikations-Moduls seitens des Mobilfunkteilnehmer-Identifikations-Moduls geändert beziehungsweise angepasst. Eine weitere Ausgestaltung der Erfindung sieht vor, dass im Rahmen der Änderung beziehungsweise Anpassung der Kennung des Mobilfunkteilnehmer-Identifikations-Moduls die geänderte beziehungsweise angepasste Kennung von dem Mobilfunknetz mittels einer Nachricht eines Nachrichtendienstes des Mobilfunknetzes an das das Mobilfunkteilnehmer-Identifikations-Modul nutzende mobile Endgerät übertragen und seitens des Mobilfunkteilnehmer-Identifikations-Moduls gespeichert wird, vorzugsweise seitens der die Kennung als Inhalt erfassenden Speicherstelle des Mobilfunkteilnehmer-Identifikations-Moduls.

Gegenstand der vorliegenden Erfindung ist ferner ein erfindungsgemäßes Verfahren, welches gekennzeichnet ist durch die folgenden, auf einem Mobilfunkteilnehmer-Identifikations-Modul und/oder seitens eines einen Mobilfunkteilnehmer-Identifikations-Modul nutzenden, in einem Mobilfunknetz betreibbaren mobilen Endgerätes ausgeführten Schritte:
- Erfassung der Kennung eines Mobilfunkteilnehmer-Identifikations-Moduls,
- Senden einer Nachricht an einen Netzknoten des Mobilfunknetzes, welche die Kennung enthält,
- Empfangen einer seitens des Mobilfunknetzes auf die Nachricht erzeugten Antwortnachricht von einem Netzknoten des Mobilfunknetzes,
- Extrahieren einer Kennung aus der empfangenen Antwortnachricht, und
- Speicherung der extrahierten Kennung auf dem Mobilfunkteilnehmer-Identifikations-Modul.

Vorteilhafterweise erfolgt die Erfassung der Kennung eines Mobilfunkteilnehmer-Identifikations-Moduls durch Lesen einer die Kennung als Inhalt aufweisenden Speicherstelle des Mobilfunkteilnehmer-Identifikations-Moduls.

Eine weitere Ausgestaltung des erfindungsgemäßen Verfahrens sieht vor, dass anhand der erfassten Kennung des Mobilfunkteilnehmer-Identifikations-Moduls ein Individualisierungserfordernis bestimmt wird.

In einer weiteren vorteilhaften Ausgestaltung der Erfindung wird das Individualisierungserfordernis anhand und/oder unter Nutzung des gelesenen Inhaltes der Speicherstelle des Mobilfunkteilnehmer-Identifikations-Moduls bestimmt. Erfindungsgemäß wird so bereits anhand der Kennung beziehungsweise der Auswertung der Kennung erkannt, ob eine Individualisierung des Mobilfunkteilnehmer-Identifikations-Moduls erforderlich ist oder nicht.

Gemäß einer weiteren vorteilhaften Ausgestaltung der Erfindung erfolgt das Senden einer Nachricht an einen Netzknoten des Mobilfunknetzes in Abhängigkeit des bestimmten Individualisierungserfordernisses. Vorteilhafterweise wird mit der Nachricht die aktuelle Kennung des Mobilfunkteilnehmer-Identifikations-Moduls mit gesendet. Hierdurch wird eine Entlastung des Telefonnetzes hinsichtlich der zwischen dem mobilen Endgerät und dem Netzknoten des Mobilfunknetzes erforderlichen Kommunikation bewirkt.

In einer weiteren besonders vorteilhaften Ausgestaltung der Erfindung wird die Kennung aus der empfangenen Antwortnachricht in Form eines seitens der Speicherstelle des Mobilfunkteilnehmer-Identifikations-Moduls speicherbaren Inhalts extrahiert, so kann seitens des Mobilfunkteilnehmer-Identifikations-Moduls beispielsweise eine Anwendung vorgesehen sein, welche die Kennung aus der empfangenen Antwortnachricht durch Extrahierung bestimmt und entsprechend seitens der Speicherstelle des Mobilfunkteilnehmer-Identifikations-Moduls speichert beziehungsweise ablegt. Vorteilhafterweise wird die extrahierte Kennung seitens der die Kennung als Inhalt erfassenden Speicherstelle des Mobilfunkteilnehmer-Identifikations-Moduls gespeichert.

Gegenstand der vorliegenden Erfindung ist ferner ein erfindungsgemäßes Verfahren, welches durch die folgenden, seitens eines Netzknotens seitens des Mobilfunknetzes und/oder seitens des Mobilfunknetzes ausgeführten Schritte gekennzeichnet ist:
- Empfangen einer Nachricht von einem im Mobilfunknetz betreibbaren mobilen Endgerät (Mobile),
- Erzeugen einer eine aktualisierte Kennung aufweisenden Antwortnachricht und
- Senden der Antwortnachricht an das mobile Endgerät (Mobile).

Vorteilhafterweise wird seitens des Netzknotens des Mobilfunknetzes und/oder seitens des Mobilfunknetzes, vorzugsweise seitens eines OTA-Servers, des Mobilfunknetzes anhand der empfangenen Nachricht des in dem Mobilfunknetz betreibbaren mobilen Endgerätes (Mobile) eine Individualisierungs-Kennung bestimmt.

Eine weitere vorteilhafte Ausgestaltung der Erfindung ist gekennzeichnet durch eine Erfassung der Gesamtanzahl der einem Mobilfunkteilnehmer zugeordneten Mobilfunkteilnehmer-Identifikations-Module (SIM-Karten) anhand der Kennung und/oder durch Senden einer Anfrage nach der Gesamtanzahl der einem Mobilfunkteilnehmer zugeordneten Mobilfunkteilnehmer-Identifikations-Module (SIM-Karten) an eine Datenbank (DB) und Empfangen einer die Gesamtanzahl der einem Mobilfunkteilnehmer zugeordneten Mobilfunkteilnehmer-Identifikations-Module (SIM-Karten) enthaltenden Antwort.

Vorteilhafterweise wird die Anfrage nach der Gesamtanzahl der einem Mobilfunkteilnehmer zugeordneten Mobilfunkteilnehmer-Identifikations-Module an eine mobilfunknetzseitige Datenbank gesendet.

In einer weiteren vorteilhaften Ausgestaltung der Erfindung erfolgt das Senden der Anfrage nach der Gesamtanzahl der einem Mobilfunkteilnehmer zugeordneten Mobilfunkteilnehmer-Identifikations-Module unter Nutzung der Kennung. In einer bevorzugten Ausgestaltung ist die Gesamtanzahl dabei Bestandteil der Kennung, vorteilhafterweise als Präfix oder Suffix.

In einer weiteren vorteilhaften Ausgestaltung der Erfindung ermöglicht die Kennung eine Überprüfung und/oder Aktualisierung der Konfiguration des von dem mobilen Endgerät genutzten Mobilfunkteilnehmer-Identifikations-Moduls zur Aktivierung von Funktionalitäten des mobilen Endgerätes und/oder des Mobilfunkteilnehmer-Identifikations-Moduls zur Nutzung von dem Mobilfunkteilnehmer im Mobilfunknetz zur Verfügung stehenden Diensten des Mobilfunknetzes. Vorteilhafterweise ist anhand der Kennung zumindest mobilfunknetzseitig der Aktualisierungsstand des von dem mobilen Endgerät genutzten Mobilfunkteilnehmer-Identifikations-Moduls feststellbar.

Eine weitere vorteilhafte Ausgestaltung der Erfindung sieht vor, dass die dem Mobilfunkteilnehmer im Mobilfunknetz zugeordneten Mobilfunkteilnehmer-Identifikations-Module Kennungen fortlaufender Nummerierungen aufweisen. Durch diese Ausgestaltung ist eine vereinfachte Verwaltung der Kennungen der Mobilfunkteilnehmer-Identifikations-Module des Mobilfunkteilnehmers ermöglicht.

In einer weiteren besonders vorteilhaften Ausgestaltung der Erfindung, werden die endgerätesseitigen Verfahrensschritte mittels eines seitens des mobilen Endgerätes und/oder eines seitens des Mobilfunkteilnehmer-Identifikations-Moduls ausführbaren Anwendungsprogramms realisiert, vorzugsweise mittels eines seitens des Mobilfunkteilnehmer-Identifikations-Moduls gespeicherten Applets.

Vorteilhafterweise werden die mobilfunknetzseitigen Verfahrensschritte mittels eines auf einer Recheneinrichtung des Mobilfunknetzes ausführbaren Anwendungsprogramm realisiert, vorzugsweise unter Nutzung eines Provisionierungs-Servers des Mobilfunknetzes, besonders bevorzugt unter Nutzung von sogenannten OTA-Diensten und/oder OTA-Servern (OTA: Over The Air).

Gegenstand der Erfindung ist ferner ein Mobilfunknetz mit einer aus Funkzellen aufgebauten zellularen Netzstruktur und darin betreibbaren mobilen Endgeräten vorzugsweise gemäß dem GSM- und/oder UMTS-Funknetzstandard, bei dem die das Mobilfunknetz ausbildenden Einrichtungen und/oder die von diesen genutzten Einrichtungen zur Ausführung eines erfindungsgemäßen Verfahrens ausgebildet sind.

Ferner betrifft die vorliegende Erfindung zur Lösung der Aufgabe ein mobiles Endgerät zum Betrieb in einem Mobilfunknetz, insbesondere ein Mobilfunktelefon, vorzugsweise gemäß dem GSM- und/oder UMTS-Funknetzstandard, welches zur Ausführung eines erfindungsgemäßen Verfahrens in einem erfindungsgemäßen Mobilfunknetz ausgebildet ist.

Gegenstand der Erfindung ist ferner ein mobiles Endgerät zum Betrieb in einem Mobilfunknetz, mit einer mit einer Sende-/Empfangseinrichtung zur Kommunikation mit dem Mobilfunknetz, einer Ein-/Ausgabeeinheit zur Kommunikation mit einem Mobilfunkteilnehmer-Identifikations-Modul und einer Steuereinrichtung zur Steuerung und/oder zur Koordinierung des Betriebs des mobilen Endgerätes, vorzugsweise zur Steuerung und/oder zur Koordinierung der Kommunikation mit dem Mobilfunknetz und/oder mit dem Mobilfunkteilnehmer-Identifikations-Modul, bei dem die Ausgabeeinheit ausgebildet ist eine Speicherstelle des Mobilfunkteilnehmer-Identifikations-Moduls zur Ausführung eines erfindungsgemäßen Verfahrens Auszulesen und/oder zu Beschreiben.

Das erfindungsgemäße mobile Endgerät ist vorteilhafterweise gekennzeichnet durch
- eine Einheit zur Erfassung der Kennung eines Mobilfunkteilnehmer-Identifikations-Moduls (SIM-Karte),
- eine Einheit zur Bestimmung eines Individualisierungserfordernisses anhand der erfassten Kennung des Mobilfunkteilnehmer-Identifikations-Moduls (SIM-Karte),
- eine Einheit zum Senden einer Nachricht an einen Netzknoten des Mobilfunknetzes,
- eine Einheit zum Empfangen einer seitens des Mobilfunknetzes auf die Nachricht erzeugten Antwortnachricht von einem Netzknoten des Mobilfunknetzes,
- eine Einheit zum Extrahieren einer Kennung aus der empfangenen Antwortnachricht, und
- eine Einheit zur Speicherung der extrahierten Kennung auf dem Mobilfunkteilnehmer-Identifikations-Modul (SIM-Karte).

Ferner wird mit der vorliegenden Erfindung zur technischen Lösung der eingangs genannten Aufgabe ein Mobilfunkteilnehmer-Identifikations-Modul zur Nutzung in einem in einem Mobilfunknetz betreibbaren mobilen Endgerät, vorzugsweise gemäß dem GSM- und/oder UMTS-Funknetzstandard, vorgeschlagen, welches
- Mittel zum Speichern einer Kennung, welche zumindest mobilfunknetzseitig eine unterscheidbare Identifizierung ermöglicht,
   seitens einer Speicherstelle des Mobilfunkteilnehmer-Identifikations-Moduls (SIM-Karte),
- Mittel zum Lesen der Kennung aus der Speicherstelle des Mobilfunkteilnehmer-Identifikations-Moduls (SIM-Karte),
- Mittel zum Initiieren der Sendung einer die Kennung umfassenden Nachricht,
- Mittel zum Empfang einer Antwortnachricht auf die Nachricht,
- Mittel zum Extrahieren einer Kennung, welche zumindest mobilfunknetzseitig eine unterscheidbare Identifizierung ermöglicht, aus der empfangenen Antwortnachricht, und
- Mittel zum Speichern der aus der Antwortnachricht extrahierten Kennung seitens der Speicherstelle des Mobilfunkteilnehmer-Identifikations-Moduls (SIM-Karte)
umfasst und zur Ausführung eines erfindungsgemäßen Verfahrens in einem erfindungsgemäßen Mobilfunknetz mit einem erfindungsgemäßen mobilen Endgerät ausgebildet ist.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Darstellung ein Ablaufdiagramm eines Ausführungsbeispiels einer erfindungsgemäßen Initialisierung einer erfindungsgemäßen Individualisierung von Mobilfunkteilnehmer-Identifikations-Modulen;
- Fig. 2: in einer schematischen Darstellung ein Ablaufdiagramm eines ersten Ausführungsbeispiels einer erfindungsgemäßen Anwendung einer erfindungsgemäßen Individualisierung von Mobilfunkteilnehmer-Identifikations-Modulen und
- Fig. 3: in einer schematischen Darstellung ein Ablaufdiagramm eines zweiten Ausführungsbeispiels einer erfindungsgemäßen Anwendung einer erfindungsgemäßen Individualisierung von Mobilfunkteilnehmer-Identifikations-Modulen.

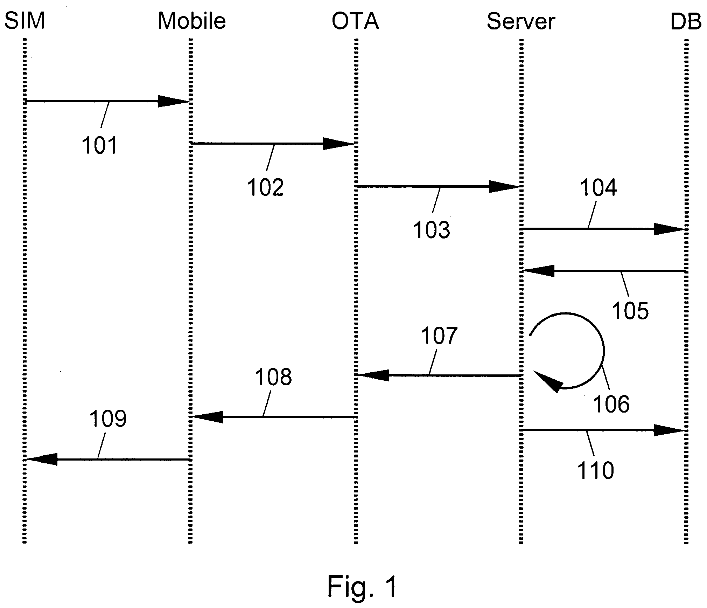

Bei den in Fig. 1 bis Fig. 3 dargestellten Ablaufdiagramme von Ausführungsbeispielen der Erfindung sind einem Mobilfunkteilnehmer in einem Mobilfunknetz zwei oder mehr einem in einem Mobilfunknetz betreibbaren mobilen Endgerät (Mobile) einen den Mobilfunkteilnehmer im Mobilfunknetz authentifizierenden Zugang zum Mobilfunknetz ermöglichende Mobilfunkteilnehmer-Identifikations-Module (SIM-Karten) zugeordnet, von denen während deckungsgleicher Zeiteinheiten nur eine einen Zugang zum Mobilfunknetz erhält. Im Zustand der Auslieferung sind die Mobilfunkteilnehmer-Identifikations-Module (SIM-Karten) dabei absolut identisch.

Beim Einschalten eines ein Mobilfunkteilnehmer-Identifikations-Modul, vorliegend eine SIM-Karte (SIM), nutzenden mobilen Endgerätes, vorliegend einem Mobilfunktelefon (Mobile), wird von dem mobilen Endgerät (Mobile) ein seitens der SIM-Karte (SIM) ausführbares Anwendungsprogramm, vorliegend ein sogenanntes Applet, initiiert. Dabei wird im Rahmen der Ausführung des Applets aus einer Speicherstelle der SIM-Karte (SIM) die aktuelle, mobilfunknetzseitig eine unterscheidbare Identifizierung der SIM-Karte ermöglichende Kennung ausgelesen und diese mittels eines Nachrichtendienstes des Mobilfunknetzes, vorliegend mittels einer SMS (SMS: Short Message Service) an einen zur Aktualisierung und/oder Provisionierung von SIM-Karten im Mobilfunknetz eingerichteten Dienst (OTA: Over The Air) übertragen.

Bei dem in Fig. 1 dargestellten Initialisierungsfall weisen die entsprechend einem Mobilfunkteilnehmer im Mobilfunknetz zugeordneten SIM-Karten mit identischen Inhalten zunächst eine identische Initialisierungskennung, vorliegend beispielsweise "0-0" auf. Dem Mobilfunkteilnehmer, also dem Nutzer des mobilen Endgerätes (Mobile) sind dabei - wie bereits erläutert - von dem Mobilfunknetzbetreiber wenigstens zwei oder mehr SIM-Karten, welche einen authentifizierenden Zugang zum Mobilfunknetz ermöglichen, zugeordnet. Während deckungsgleicher Zeiteinheiten erhält dabei nur eine SIM-Karte einen Zugang zum Mobilfunknetz. Das Auslesen der Kennung "0-0" aus einer dafür vorgesehenen Speicherstelle der SIM-Karte (SIM) ist in der Fig. 1 durch den mit 101 gekennzeichneten Verfahrensschritt dargestellt. Das Übertragen der die Kennung "0-0" der SIM-Karte (SIM) aufweisenden Nachricht von dem mobilen Endgerät (Mobile) an den entsprechenden Aktualisierungs- beziehungsweise Provisionierungsdienst (OTA) des Mobilfunknetzes ist in Fig. 1 durch den mit 102 gekennzeichneten Verfahrensschritt symbolisch dargestellt.

Seitens des Mobilfunknetzes wird von dem die Aktualisierung beziehungsweise Provisionierung der SIM-Karte (SIM) vornehmenden Dienst beziehungsweise der entsprechenden Einrichtung (OTA) eine die entsprechende Kennung "0-0" der SIM-Karte (SIM) an eine Recheneinrichtung (Server) des Mobilfunknetzes, vorliegend einem sogenannten OTA-Server, übertragen. Das Übertragen der Kennung "0-0" der SIM-Karte (SIM) an die Recheneinrichtung (OTA-Server) ist in Fig. 1 durch den mit 103 gekennzeichneten Verfahrensschritt dargestellt.

Die Recheneinrichtung ist mit einer Datenbank (DB) verbunden beziehungsweise weist eine solche auf und schaut in dem mit 104 gekennzeichneten Verfahrensschritt zur Nutzung der Kennung "0-0" in der Datenbank nach, ob und welche SIM-Karte (SIM) für den entsprechenden Mobilfunkteilnehmer zugeordnet ist beziehungsweise zugeordnet werden muss. Dabei wird vorliegend anhand der Kennung "0-0" signalisiert, dass es sich um eine noch nicht individualisierte SIM-Karte handelt. Das Ergebnis der Datenbankabfrage wird in Fig. 1 mit dem durch 105 gekennzeichneten Verfahrensschritt der Recheneinrichtung (Server) mitgeteilt und entsprechend die Kennung der SIM-Karte (SIM) von "0-0" auf vorliegend beispielsweise "1-5" gesetzt. Das Festsetzen der Kennung seitens der Recheneinrichtung (Server) ist in Fig. 1 symbolisch durch den mit 106 gekennzeichneten Verfahrensschritt dargestellt. Die Kennungen sind vorliegend exemplarisch so aufgebaut, dass die erste Ziffer der Kennung die fortlaufende Nummerierung der dem Mobilfunkteilnehmer jeweils zugeordneten SIM-Karte (SIM) aufweist und die zweite nach dem "-" kommende Ziffer die Gesamtanzahl der dem Mobilfunkteilnehmer zugeordneten SIM-Karten (SIM) aufweist. Die Gesamtanzahl, vorliegend beispielsweise die "5", ist dabei bereits für den Mobilfunkteilnehmer und/oder deren SIM-Karten in der Datenbank (DB) erfasst, vorliegend beispielsweise im Rahmen der Herstellung der SIM-Karten (SIM) des Mobilfunkteilnehmers.

Die so seitens der Recheneinrichtung (Server) bestimmte Kennung wird in dem mit 107 gekennzeichneten Verfahrensschritt von der Recheneinrichtung (Server) an den Aktualisierungs- beziehungsweise Provisionierungs-Dienst (OTA) des Mobilfunknetzes übertragen und von diesem mittels einer Nachricht mittels eines Nachrichtendienstes, vorliegend mittels einer SMS, in den mit 108 gekennzeichneten Verfahrensschritt an das mobile Endgerät (Mobile) übertragen. In dem mit 109 gekennzeichneten Verfahrensschritt wird dann die so seitens der Recheneinrichtung initialisierte Kennung "1-5" der SIM-Karte (SIM) seitens der Speicherstelle der SIM-Karte (SIM) gespeichert. Dabei wird die entsprechend seitens der Speicherstelle der SIM-Karte (SIM) gespeicherte Kennung "1-5" aus der im Verfahrensschritt 108 von dem Aktualisierungsbeziehungsweise Provisionierungs-Dienst (OTA) übertragenen Nachricht (Verfahrensschritt 108) extrahiert. Das Senden der Nachricht 108 von dem Aktualisierungs- beziehungsweise Provisionierungs-Dienst (OTA) wird seitens des entsprechenden Aktualisierungs- beziehungsweise Provisionierungs-Dienst (OTA) anhand des Inhaltes der im Verfahrenschritt 107 von der Recheneinrichtung (Server) an den Aktualisierungs- beziehungsweise Provisionierungs-Dienst übertragenen Nachricht aus deren Inhalt, beispielsweise deren Text, ermittelt.

Die im Verfahrensschritt 106 von der Recheneinrichtung (Server) erfasste beziehungsweise geänderte Kennung der SIM-Karte (SIM) von "0-0" auf "1-5" wird in dem mit Verfahrensschritt 110 gekennzeichneten Verfahrensschritt entsprechend in der Datenbank (DB) durch Speichern erfasst. In der Datenbank (DB) ist damit erfasst, dass die erste von fünf SIM-Karten (SIM) des Nutzers individualisiert wurde beziehungsweise ist.

Bei einem Wechsel der SIM-Karte (SIM) im Rahmen der Nutzung in dem mobilen Endgerät (Mobile) wird entsprechend von der dann neu eingesetzten quasi jungfräulichen SIM-Karte (SIM) deren Kennung "0-0" in den Verfahrenschritten 101 bis 104 an die Datenbank (DB) übertragen. Da zuvor bereits eine SIM-Karte (SIM) des Mobilfunkteilnehmers in der Datenbank (DB) erfasst wurde, wird dementsprechend die Kennung der neuen SIM-Karte (SIM) in dem mit 106 gekennzeichneten Verfahrensschritt aufgrund der Rückmeldung aus der Datenbank (DB) im Verfahrenschritt 105 von "0-0" auf "2-5" gesetzt. In den Verfahrensschritten 107 bis 109 wird die entsprechende Kennung dann von der Recheneinrichtung (Server) über den Aktualisierungs- beziehungsweise Provisionierungs-Dienst (OTA) an das mobile Endgerät (Mobile) und entsprechend an die SIM-Karte (SIM) übertragen. Ferner wird in der Datenbank (DB) in dem mit 110 gekennzeichneten Verfahrensschritt festgehalten, dass für den Mobilfunkteilnehmer nunmehr zwei SIM-Karten (SIM) individualisierte SIM-Karten (SIM) vorhanden sind, so dass für die erste SIM-Karte (SIM) entsprechend die Kennungen "1-5" und die zweite SIM-Karte (SIM) die Kennung "2-5" erfasst wird beziehungsweise ist.

Entsprechend werden die weiteren, dem Mobilfunkteilnehmer zugeordneten SIM-Karten (SIM) im Rahmen der Initialisierung derselben seitens des Mobilfunknetzes die individuellen Kennungen der einzelnen SIM-Karten (SIM), also für die drei weiteren SIM-Karten (SIM) des Mobilfunkteilnehmers die Kennungen "3-5", "4-5" und "5-5", auf diesen und seitens des Mobilfunknetzes erfasst.

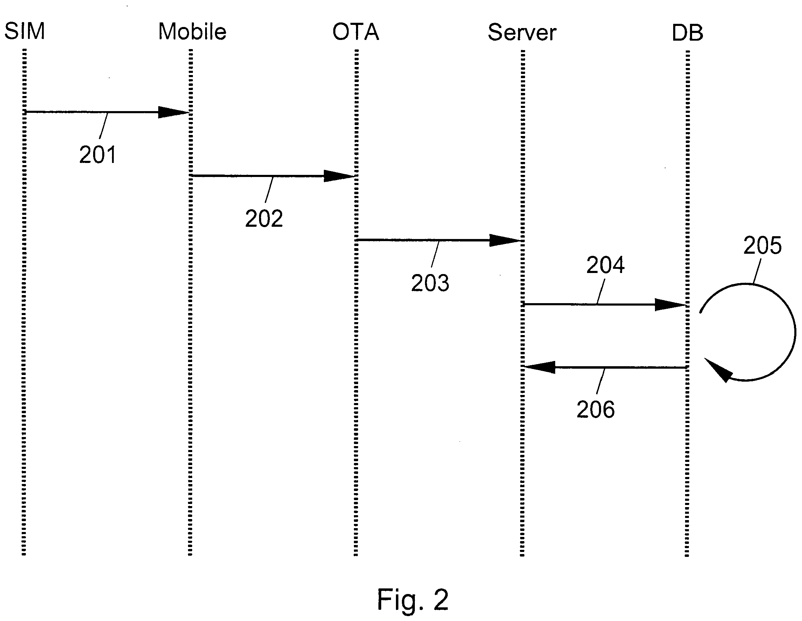

Das Ablaufdiagramm gemäß Fig. 2 zeigt ein ersten Anwendungsfall einer Individualisierung von entsprechend Fig. 1 initialisierten SIM-Karten (SIM). Eine entsprechende Anwendung ist dabei beispielsweise bei einer Aktualisierung beziehungsweise Provisionierung von einem mobilen Endgerät (Mobile) im Mobilfunknetz zur Verfügung stehenden Diensten und/oder Funktionalitäten des Mobilfunknetzes gegeben, beispielsweise bei Änderungen von Abrechnungsinformationen für ein sogenanntes Roaming, eine Änderung von sogenannten Diensteprofilen in Abhängigkeit von für den Mobilfunkteilnehmer im Mobilfunknetz eingerichteten Vorzugsgebieten, beispielsweise in Abhängigkeit von geographischen Orten hinsichtlich unterschiedlicher Tarifoptionen oder dergleichen Diensten und/oder Funktionalitäten eines Mobilfunknetzes.

Initiiert von dem mobilen Endgerät (Mobile) wird seitens der SIM-Karte (SIM) vorliegend automatisch und/oder auf Anforderung des Nutzers des mobilen Endgerätes (Mobile) ein seitens der SIM-Karte (SIM) ausführbares Anwendungsprogramm, vorliegend ein Applet, ausgeführt. Dabei wird in dem mit 201 gekennzeichneten Verfahrensschritt von dem Applet die seitens der Speicherstelle der SIM-Karte (SIM) gespeicherte Kennung, vorliegend beispielsweise "1-5", entsprechend also die erste SIM-Karte von fünf dem Mobilfunkteilnehmer im Mobilfunknetz zugeordneten SIM-Karten, ausgelesen.

Die so aus der Speicherstelle der SIM-Karte (SIM) ausgelesene Kennung "1-5" wird von dem mobilen Endgerät initiiert durch das Anwendungsprogramm (Applet) in dem mit 202 gekennzeichneten Verfahrensschritt über einen Nachrichtendienst des Mobilfunknetzes, vorliegend mittels einer SMS, an den Aktualisierungs- beziehungsweise Provisionierungsdienst (OTA) des Mobilfunknetzes übertragen.

Der Aktualisierungs- beziehungsweise Provisionierungsdienst übermittelt die entsprechende Kennung "1-5" an eine die Aktualisierung beziehungsweise Provisionierung überprüfende Recheneinrichtung (Server), vorliegend einem OTA-Server. Die Recheneinrichtung (Server) ist mit einer Datenbank (DB), welche Informationen über den Aktualisierungsstand von dem Mobilfunkteilnehmer zugeordneten SIM-Karten aufweist, verbunden beziehungsweise weist diese auf (Verfahrensschritt 203).

In dem Verfahrensschritt 204 fragt die Recheneinrichtung (Server) unter Nutzung der Kennung "1-5" in der Datenbank (DB) entsprechende Aktualisierungsinformationen zu der SIM-Karte "1-5" ab. Im Rahmen der Datenbankabfrage wird in dem Verfahrensschritt 205 überprüft, ob die entsprechende SIM-Karte mit der Kennung "1-5" schon aktualisiert wurde oder nicht. Bei dem in Fig. 2 dargestellten Anwendungsfall ist die entsprechende SIM-Karte mit der Kennung "1-5" bereits aktualisiert. Dementsprechend wird eine entsprechende Mitteilung als Ergebnis in dem mit 206 gekennzeichneten Verfahrensschritt seitens der Recheneinrichtung (Server) ermittelt. Eine entsprechende Aktualisierung der SIM-Karte"1-5" ist dementsprechend nicht weiter erforderlich, wie anhand der mobilfunknetzseitigen Abfrage unter Nutzung der individuellen Kennung "1-5" der SIM-Karte ermittelt wurde.

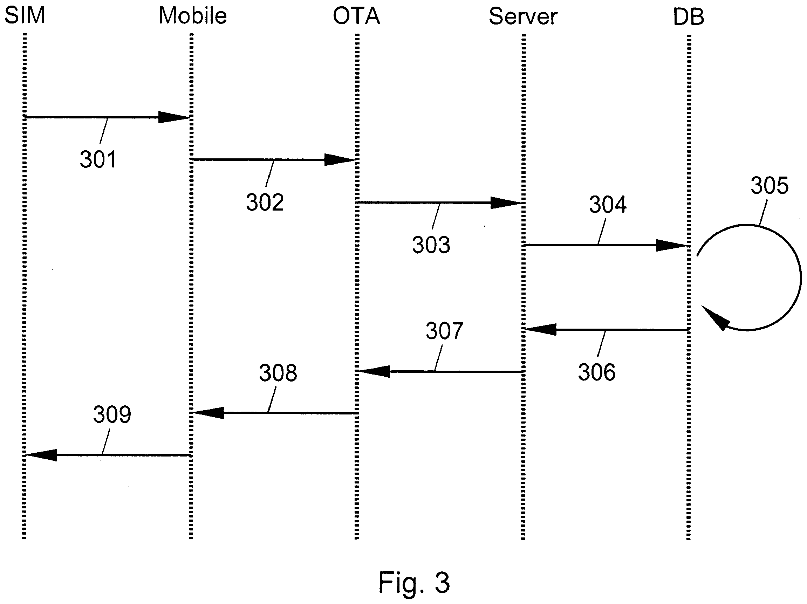

Fig. 3 zeigt einen weiteren Anwendungsfall zur Aktualisierung beziehungsweise Provisionierung von entsprechend individualisierten SIM-Karten (SIM). Dabei ist vorliegend eine weitere, dem Mobilfunkteilnehmer im Mobilfunknetz zugeordnete SIM-Karte, vorliegend die SIM-Karte mit der Kennung "2-5" in das mobile Endgerät (Mobile) eingesetzt worden. Im Rahmen der Ausführung des Anwendungsprogramms (Applet) auf der SIM-Karte (Verfahrensschritt 301) wird die seitens der Speicherstelle der SIM-Karte erfasste Kennung "2-5" ausgelesen und in dem mit 302 gekennzeichneten Verfahrensschritt über einen Nachrichtendienst des Mobilfunknetzes, vorliegend mittels SMS, von dem mobilen Endgerät (Mobile) an den Aktualisierungs- beziehungsweise Provisionierungsdienst (OTA) übertragen.

Die Kennung "2-5" wird dann von dem Aktualisierungs- beziehungsweise Provisionierungsdienst einer dazu eingerichteten Recheneinrichtung (Server), vorliegend einem OTA-Server, übermittelt, wie in Fig. 3 anhand des mit 303 gekennzeichneten Verfahrensschrittes dargestellt.

Die Recheneinrichtung (Server) fragt unter Nutzung der Kennung "2-5" in dem mit 304 gekennzeichneten Verfahrensschritt in der Datenbank (DB) den Aktualisierungstand beziehungsweise ein Aktualisierungserfordernis der SIM-Karte mit der Kennung "2-5" ab.

Im Rahmen der Abfrage wird wie in Fig. 3 durch den mit 305 gekennzeichneten Verfahrensschritt symbolisch dargestellt, überprüft, ob die SIM-Karte der Kennung "2-5" aktualisiert werden muss, also ob ein Aktualisierungsbedürfnis der SIM-Karte "2-5" vorliegt oder nicht. In dem vorliegenden Fall ist ein Aktualisierungsbedürfnis für die SIM-Karte (SIM) mit der Kennung "2-5" erforderlich.

Die entsprechende Aktualisierung der SIM-Karte "2-5" wird der Recheneinrichtung (Server) mit dem mit 306 gekennzeichneten Verfahrensschritt mitgeteilt und von diesem weiter initiiert. Seitens der Datenbank (DB) wird für die Kennung "2-5" entsprechend vermerkt, dass eine Aktualisierung initiiert wurde.

In dem mit 307 gekennzeichneten Verfahrensschritt sendet die Recheneinrichtung (Server) dem Aktualisierungs- beziehungsweise Provisionierungsdienst (OTA) die entsprechenden für die Aktualisierung erforderlichen beziehungsweise entsprechenden Informationen, vorliegend Aktualisierungsinformationen für die SIM-Karte "2-5". Diese werden in dem mit 308 gekennzeichneten Verfahrenschritt über einen Nachrichtendienst des Mobilfunknetzes an das mobile Endgerät (Mobile) übertragen und in dem mit 309 gekennzeichneten Verfahrensschritt seitens der SIM-Karte durch Speichern erfasst.

Da im Rahmen einer Aktualisierung mitunter Kenntnisse über das jeweils mit der SIM-Karte (SIM) genutzte mobile Endgerät (Mobile) erforderlich sind, wird im Rahmen der Übertragung der Kennung der SIM-Karte (SIM) von dem mobilen Endgerät (Mobile) an den Aktualisierungs- beziehungsweise Provisionierungsdienst (OTA) (vergleiche Verfahrens- beziehungsweise Ablaufschritte 202 und/oder 302) vorteilhafterweise eine gerätespezifische Kennung des mobilen Endgerätes (Mobile) mit übertragen. Vorteilhafterweise wird dazu von dem Anwendungsprogramm (Applet) mit der Erfassung der Kennung die gerätespezifische Kennung des mobilen Endgerätes (Mobile), vorzugsweise die sogenannte IMEI, erfasst und mit übertragen, vorzugsweise durch Anhängen an die Nachricht. Erfindungsgemäß ist so eine gezielte gerätespezifische Aktualisierung vornehmbar.

Die in den Figuren der Zeichnung dargestellten Ausführungsbeispiele dienen lediglich der Erläuterung der Erfindung und sind für diese nicht beschränkend.

### Bezugszeichenliste

- 101: Verfahrensschritt
- 102: Verfahrensschritt
- 103: Verfahrensschritt
- 104: Verfahrensschritt
- 105: Verfahrensschritt
- 106: Verfahrensschritt
- 107: Verfahrensschritt
- 108: Verfahrensschritt
- 109: Verfahrensschritt
- 110: Verfahrensschritt
- 201: Verfahrensschritt
- 202: Verfahrensschritt
- 203: Verfahrensschritt
- 204: Verfahrensschritt
- 205: Verfahrensschritt
- 206: Verfahrensschritt
- 301: Verfahrensschritt
- 302: Verfahrensschritt
- 303: Verfahrensschritt
- 304: Verfahrensschritt
- 305: Verfahrensschritt
- 306: Verfahrensschritt
- 307: Verfahrensschritt
- 308: Verfahrensschritt
- 309: Verfahrensschritt
- SIM: Mobilfunkteilnehmer-Identifikations-Modul
- Mobile: mobiles Endgerät/Mobilfunktelefon
- OTA: mobilfunknetzseitiger Dienst (Provisionierungsdienst) (OTA: Over The Air)
- Server: mobilfunknetzseitige Recheneinrichtung
- DB: mobilfunknetzseitige Datenbank

## Patentansprüche

1. Verfahren zur Individualisierung von Mobilfunkteilnehmer-Identifikations-Modulen (SIM), welche einem in einem Mobilfunknetz betreibbaren mobilen Endgerät (Mobile) einen einen Mobilfunkteilnehmer im Mobilfunknetz authentifizierenden Zugang zum Mobilfunknetz ermöglichen, wobei dem Mobilfunkteilnehmer im Mobilfunknetz wenigstens zwei oder mehr mobilfunknetzseitig nicht voneinander unterscheidbare Mobilfunkteilnehmer-Identifikations-Module (SIM) mit identischen Inhalten zugeordnet sind, von denen während deckungsgleicher Zeiteinheiten nur eine einen Zugang zum Mobilfunknetz erhält,
wobei die Mobilfunkteilnehmer-Identifikations-Module (SIM) seitens des mobilen Endgerätes jeweils mit wenigstens einer Kennung versehen werden, welche zumindest mobilfunknetzseitig eine unterscheidbare Identifizierung der jeweiligen Mobilfunkteilnehmer-Identifikations-Module (SIM) ermöglicht, und die Kennung eines Mobilfunkteilnehmer-Identifikations-Moduls (SIM) von dem diese nutzenden mobilen Endgerät (Mobile) mittels einer Nachricht eines Nachrichtendienstes des Mobilfunknetzes an das Mobilfunknetz übertragen wird,
wobei die von dem mobilen Endgerät (Mobile) an das Mobilfunknetz übertragene Kennung mobilfunknetzseitig wenigstens einem Vergleich mit wenigstens einer der in einer mobilfunknetzseitigen Datenbank (DB) bereits erfassten und verwalteten Kennungen des Mobilfunkteilnehmers unterzogen wird.

2. Verfahren nach Anspruch 1, **dadurch gekennzeichnet, dass** die Kennung seitens einer Speicherstelle eines Mobilfunkteilnehmer-Identifikations-Moduls (SIM) als Inhalt der Speicherstelle erfasst wird.

3. Verfahren nach Anspruch 1 oder Anspruch 2, **dadurch gekennzeichnet, dass** die Kennungen der dem Mobilfunkteilnehmer zugeordneten Mobilfunkteilnehmer-Identifikations-Module (SIM) in der wenigstens einen mobilfunknetzseitigen Datenbank (DB) erfasst und verwaltet werden.

4. Verfahren nach einem der Ansprüche 1 bis 3, **dadurch gekennzeichnet, dass** die Gesamtanzahl der dem Mobilfunkteilnehmer zugeordneten Mobilfunkteilnehmer-Identifikations-Module (SIM) Bestandteil der jeweiligen Kennung eines Mobilfunkteilnehmer-Identifikations-Moduls (SIM) ist oder zumindest aus dieser ermittelbar ist.

5. Verfahren nach einem der Ansprüche 1 bis 4, **dadurch gekennzeichnet, dass** die Gesamtanzahl der dem Mobilfunkteilnehmer zugeordneten Mobilfunkteilnehmer-Identifikations-Module (SIM) auf dem jeweiligen Mobilfunkteilnehmer-Identifikations-Modul (SIM) seitens der die Kennung als Inhalt erfassenden Speicherstelle des Mobilfunkteilnehmer-Identifikations-Moduls (SIM) und/oder seitens der wenigstens einen mobilfunknetzseitigen Datenbank (DB) erfasst ist, vorzugsweise im Rahmen der Herstellung der Mobilfunkteilnehmer-Identifikations-Module (SIM).

6. Verfahren nach einem der Ansprüche 1 bis 5, **dadurch gekennzeichnet, dass** die Kennung an eine die wenigstens eine mobilfunknetzseitige Datenbank (DB) nutzende Recheneinrichtung (OTA, Server) des Mobilfunknetzes übertragen wird.

7. Verfahren nach einem der Ansprüche 1 bis 6, **dadurch gekennzeichnet, dass** die Übertragung der Kennung durch eine seitens des mobilen Endgerätes (Mobile) und/oder eine seitens des Mobilfunkteilnehmer-Identifikations-Moduls (SIM) ausführbare Anwendung des Mobilfunkteilnehmer-Identifikations-Moduls (SIM) initiiert wird.

8. Verfahren nach einem der Ansprüche 1 bis 7, **dadurch gekennzeichnet, dass** die Übertragung der Kennung endgeräteseitig initiiert wird, vorzugsweise automatisch, besonders bevorzugt beim Einschalten des mobilen Endgerätes (Mobile) oder beim Anmelden des mobilen Endgerätes (Mobile) beim beziehungsweise in dem Mobilfunknetz, und/oder manuell durch wenigstens eine Betätigungseingabe.

9. Verfahren nach einem der Ansprüche 1 bis 7, **dadurch gekennzeichnet, dass** die Übertragung der Kennung mobilfunknetzseitig initiiert wird, vorzugsweise mittels einer von dem Mobilfunknetz an das mobile Endgerät (Mobile) übertragenen Nachricht eines Nachrichtendienstes des Mobilfunknetzes.

10. Verfahren nach einem der Ansprüche 1 bis 9, **dadurch gekennzeichnet, dass** der Vergleich seitens einer die wenigstens eine mobilfunknetzseitige Datenbank (DB) nutzenden Recheneinrichtung (OTA, Server) des Mobilfunknetzes vollzogen wird.

11. Verfahren nach einem der Ansprüche 1 bis 10, **dadurch gekennzeichnet, dass** in Abhängigkeit von dem Ergebnis des wenigstens einen Vergleichs die Kennung des Mobilfunkteilnehmer-Identifikations-Moduls (SIM) seitens des Mobilfunkteilnehmer-Identifikations-Moduls (SIM) geändert wird.

12. Verfahren nach Anspruch 11, **dadurch gekennzeichnet, dass** im Rahmen der Änderung der Kennung des Mobilfunkteilnehmer-Identifikations-Moduls (SIM) die geänderte Kennung von dem Mobilfunknetz mittels einer Nachricht eines Nachrichtendienstes des Mobilfunknetzes an das das Mobilfunkteilnehmer-Identifikations-Modul (SIM) nutzende mobile Endgerät (Mobile) übertragen und seitens des Mobilfunkteilnehmer-Identifikations-Moduls (SIM) gespeichert wird, vorzugsweise seitens der die Kennung als Inhalt erfassenden Speicherstelle des Mobilfunkteilnehmer-Identifikations-Moduls (SIM).

13. Verfahren nach einem der Ansprüche 1 bis 12, **gekennzeichnet durch** die folgenden, auf einem Mobilfunkteilnehmer-Identifikations-Modul (SIM) und/oder seitens eines ein Mobilfunkteilnehmer-Identifikations-Modul (SIM) nutzenden, in einem Mobilfunknetz betreibbaren mobilen Endgerätes (Mobile) ausgeführten Schritte:
- Erfassung der Kennung eines Mobilfunkteilnehmer-Identifikations-Moduls (SIM),
- Senden einer Nachricht an einen Netzknoten des Mobilfunknetzes, welche die Kennung enthält,
- Empfangen einer seitens des Mobilfunknetzes auf die Nachricht erzeugten Antwortnachricht von einem Netzknoten des Mobilfunknetzes,
- Extrahieren einer Kennung aus der empfangenen Antwortnachricht, und
- Speicherung der extrahierten Kennung auf dem Mobilfunkteilnehmer-Identifikations-Moduls (SIM).

14. Verfahren nach Anspruch 13, **dadurch gekennzeichnet, dass** die Erfassung der Kennung eines Mobilfunkteilnehmer-Identifikations-Moduls (SIM), durch Lesen einer die Kennung als Inhalt aufweisenden Speicherstelle des Mobilfunkteilnehmer-Identifikations-Moduls (SIM) seitens des mobilen Endgerätes erfolgt.

15. Verfahren nach Anspruch 13 oder Anspruch 14, **dadurch gekennzeichnet, dass** anhand der erfassten Kennung des Mobilfunkteilnehmer-Identifikations-Moduls (SIM) ein Individualisierungserfordernis seitens des mobilen Endgerätes bestimmt wird.

16. Verfahren nach Anspruch 15, **dadurch gekennzeichnet, dass** das Individualisierungserfordernis seitens des mobilen Endgerätes anhand und/oder unter Nutzung des gelesenen Inhaltes der Speicherstelle des Mobilfunkteilnehmer-Identifikations-Moduls (SIM) bestimmt wird.

17. Verfahren nach Anspruch 15 oder Anspruch 16, **dadurch gekennzeichnet, dass** das Senden einer Nachricht an einen Netzknoten des Mobilfunknetzes seitens des mobilen Endgerätes in Abhängigkeit des bestimmten Individualisierungserfordernisses erfolgt.

18. Verfahren nach Anspruch 17, **dadurch gekennzeichnet, dass** seitens des mobilen Endgerätes mit der Nachricht die aktuelle Kennung des Mobilfunkteilnehmer-Identifikations-Moduls (SIM) mit gesendet wird.

19. Verfahren nach einem der Ansprüche 13 bis 18, **dadurch gekennzeichnet, dass** die Kennung vom mobilen Endgerät aus der empfangenen Antwortnachricht in Form eines seitens der Speicherstelle des Mobilfunkteilnehmer-Identifikations-Moduls (SIM) speicherbaren Inhalts extrahiert wird.

20. Verfahren nach einem der Ansprüche 13 bis 19, **dadurch gekennzeichnet, dass** die extrahierte Kennung seitens der die Kennung als Inhalt erfassenden Speicherstelle des Mobilfunkteilnehmer-Identifikations-Moduls (SIM) gespeichert wird.

21. Verfahren nach einem der Ansprüche 1 bis 12,
**gekennzeichnet durch**
die folgenden, seitens eines Netzknotens des Mobilfunknetzes und/oder seitens des Mobilfunknetzes ausgeführten Schritte:
- Empfangen einer Nachricht von einem im Mobilfunknetz betreibbaren mobilen Endgerät (Mobile),
- Erzeugen einer eine aktualisierte Kennung aufweisenden Antwortnachricht und
- Senden der Antwortnachricht an das mobile Endgerät (Mobile).

22. Verfahren nach Anspruch 21, **dadurch gekennzeichnet, dass** seitens des Netzknotens des Mobilfunknetzes und/oder seitens des Mobilfunknetzes, vorzugsweise seitens eines OTA-Servers des Mobilfunknetzes, anhand der empfangenen Nachricht des in dem Mobilfunknetz betreibbaren mobilen Endgerätes (Mobile) eine Individualisierungs-Kennung bestimmt wird.

23. Verfahren nach Anspruch 21 oder Anspruch 22, **gekennzeichnet durch** eine seitens des Netzknotens des Mobilfunknetzes und/oder seitens des Mobilfunknetzes vorgesehene Erfassung der Gesamtanzahl der einem Mobilfunkteilnehmer zugeordneten Mobilfunkteilnehmer-Identifikations-Module (SIM) anhand der Kennung und/oder **durch** Senden einer Anfrage nach der Gesamtanzahl der einem Mobilfunkteilnehmer zugeordneten Mobilfunkteilnehmer-Identifikations-Module (SIM) an eine Datenbank (DB) und Empfangen einer die Gesamtanzahl der einem Mobilfunkteilnehmer zugeordneten Mobilfunkteilnehmer-Identifikations-Module (SIM) enthaltenden Antwort.

24. Verfahren nach Anspruch 23, **dadurch gekennzeichnet, dass** die Anfrage nach der Gesamtanzahl der einem Mobilfunkteilnehmer zugeordneten Mobilfunkteilnehmer-Identifikations-Module (SIM) vom Netzknoten des Mobilfunknetzes und/oder vom Mobilfunknetz an eine mobilfunknetzseitige Datenbank (DB) gesendet wird.

25. Verfahren nach Anspruch 23 oder Anspruch 24, **dadurch gekennzeichnet, dass** das Senden der Anfrage nach der Gesamtanzahl der einem Mobilfunkteilnehmer zugeordneten Mobilfunkteilnehmer-Identifikations-Module (SIM) unter Nutzung der Kennung erfolgt.

26. Verfahren nach einem der Ansprüche 1 bis 25, **dadurch gekennzeichnet, dass** die Kennung eine mobilfunknetzseitige Überprüfung und/oder Aktualisierung der Konfiguration des von dem mobilen Endgerät (Mobile) genutzten Mobilfunkteilnehmer-Identifikations-Moduls (SIM) zur Aktivierung von Funktionalitäten des mobilen Endgerätes (Mobile) und/oder des Mobilfunkteilnehmer-Identifikations-Moduls (SIM) zur Nutzung von dem Mobilfunkteilnehmer im Mobilfunknetz zur Verfügung stehenden Diensten des Mobilfunknetzes ermöglicht.

27. Verfahren nach Anspruch 26, **dadurch gekennzeichnet, dass** anhand der Kennung zumindest mobilfunknetzseitig der Aktualisierungsstand des von dem mobilen Endgerät (Mobile) genutzten Mobilfunkteilnehmer-Identifikations-Moduls (SIM) feststellbar ist.

28. Verfahren nach einem der Ansprüche 1 bis 27, **dadurch gekennzeichnet, dass** die dem Mobilfunkteilnehmer im Mobilfunknetz zugeordneten Mobilfunkteilnehmer-Identifikations-Module (SIM) Kennungen fortlaufender Nummerierungen aufweisen.

29. Verfahren nach einem der Ansprüche 1 bis 28, **dadurch gekennzeichnet, dass** die endgerätesseitigen Verfahrensschritte mittels eines seitens des mobilen Endgerätes (Mobile) und/oder eines seitens des Mobilfunkteilnehmer-Identifikations-Moduls (SIM) ausführbaren Anwendungsprogramms realisiert werden, vorzugsweise mittels eines seitens des Mobilfunkteilnehmer-Identifikations-Moduls (SIM) gespeicherten Applets.

30. Verfahren nach einem der Ansprüche 1 bis 29, **dadurch gekennzeichnet, dass** die mobilfunknetzseitigen Verfahrensschritte mittels eines auf einer Recheneinrichtung (OTA, Server) des Mobilfunknetzes ausführbaren Anwendungsprogramms realisiert werden, vorzugsweise unter Nutzung eines Provisionierungs-Servers des Mobilfunknetzes.

31. Mobilfunknetz mit einer aus Funkzellen aufgebauten zellularen Netzstruktur und darin betreibbaren mobilen Endgeräten (Mobile), vorzugsweise gemäß dem GSM- und/oder UMTS-Funknetzstandard, **dadurch gekennzeichnet,**
**dass** die das Mobilfunknetz ausbildenden Einrichtungen und/oder die von diesen genutzten Einrichtungen zur Ausführung eines Verfahrens nach einem der Ansprüche 1 bis 30 ausgebildet sind.

32. Mobiles Endgerät (Mobile) zum Betrieb in einem Mobilfunknetz, insbesondere Mobilfunktelefon, vorzugsweise gemäß dem GSM- und/oder UMTS-Funknetzstandard,
**dadurch gekennzeichnet,**
**dass** dieses zur Ausführung der seitens eines mobilen Endgerätes (Mobile) ausführbaren Verfahrensschritte eines Verfahrens nach einem der Ansprüche 1 bis 30, vorzugsweise in einem Mobilfunknetz nach Anspruch 31, ausgebildet ist.

33. Mobiles Endgerät (Mobile) nach Anspruch 32 mit einer Sende-/Empfangseinrichtung zur Kommunikation mit dem Mobilfunknetz, einer Ein-/Ausgabeeinheit zur Kommunikation mit einem Mobilfunkteilnehmer-Identifikations-Modul (SIM) und einer Steuereinrichtung zur Steuerung und/oder zur Koordinierung des Betriebs des mobilen Endgerätes (Mobile), vorzugsweise zur Steuerung und/oder zur Koordinierung der Kommunikation mit dem Mobilfunknetz und/oder mit dem Mobilfunkteilnehmer-Identifikations-Modul (SIM),
**dadurch gekennzeichnet,**
**dass** die Ein-/Ausgabeeinheit ausgebildet ist, eine Speicherstelle des Mobilfunkteilnehmer-Identifikations-Moduls (SIM) zur Ausführung eines Verfahrens nach einem der Ansprüche 1 bis 30 auszulesen und/oder zu beschreiben.

34. Mobiles Endgerät (Mobile) nach Anspruch 32 oder Anspruch 33,
**gekennzeichnet durch**,
- eine Einheit zur Erfassung der Kennung eines Mobilfunkteilnehmer-Identifikations-Moduls (SIM),
- eine Einheit zur Bestimmung eines Individualisierungserfordernisses anhand der erfassten Kennung des Mobilfunkteilnehmer-Identifikations-Moduls (SIM),
- eine Einheit zum Senden einer Nachricht an einen Netzknoten des Mobilfunknetzes,
- eine Einheit zum Empfangen einer seitens des Mobilfunknetzes auf die Nachricht erzeugten Antwortnachricht von einem Netzknoten des Mobilfunknetzes,
- eine Einheit zum Extrahieren einer Kennung aus der empfangenen Antwortnachricht, und
- eine Einheit zur Speicherung der extrahierten Kennung auf dem Mobilfunkteilnehmer-Identifikations-Modul (SIM).

35. Mobilfunkteilnehmer-Identifikations-Modul (SIM) zur Nutzung in einem in einem Mobilfunknetz betreibbaren mobilen Endgerät, vorzugsweise gemäß dem GSM- und/oder UMTS-Funknetzstandard,
**dadurch gekennzeichnet,**
**dass** dieses
- Mittel zum Speichern einer Kennung, welche zumindest mobilfunknetzseitig eine unterscheidbare Identifizierung ermöglicht, seitens einer Speicherstelle des Mobilfunkteilnehmer-Identifikations-Moduls (SIM),
- Mittel zum Lesen der Kennung aus der Speicherstelle des Mobilfunkteilnehmer-Identifikations-Moduls (SIM),
- Mittel zum Initiieren der Sendung einer die Kennung umfassenden Nachricht,
- Mittel zum Empfang einer Antwortnachricht auf die Nachricht,
- Mittel zum Extrahieren einer Kennung, welche zumindest mobilfunknetzseitig eine unterscheidbare Identifizierung ermöglicht, aus der empfangenen Antwortnachricht, und
- Mittel zum Speichern der aus der Antwortnachricht extrahierten Kennung seitens der Speicherstelle des Mobilfunkteilnehmer-Identifikations-Moduls (SIM)
umfasst, und
zur Ausführung eines Verfahrens nach einem der Ansprüche 1 bis 30, vorzugsweise in einem Mobilfunknetz nach Anspruch 31, vorzugsweise mit einem mobilen Endgerät (Mobile) nach einem der Ansprüche 32 bis 33 ausgebildet ist.

## Claims

1. A method for individualising mobile phone subscriber identification modules (SIM) which allow a mobile terminal (mobile) to be operated in a mobile radio network to have an access to the mobile radio network, which access authenticates a mobile subscriber in the mobile radio network, wherein at least two or more mobile phone subscriber identification modules (SIM) which have identical contents and cannot be distinguished from each other by the mobile radio network are allocated to the mobile subscriber in the mobile radio network, wherein only one of these mobile phone subscriber identification modules (SIM) obtains an access to the mobile radio network during congruent time units,
wherein the mobile phone subscriber identification modules (SIM) are provided with respectively at least one identifier by means of the mobile terminal, which identifier allows a distinguishable identification of the respective mobile phone subscriber identification modules (SIM) at least by the mobile radio network,
and
the identifier of a mobile phone subscriber identification module (SIM) will be transmitted by means of the mobile terminal (mobile) using this one via a message of a message service of the mobile radio network to the mobile radio network,
wherein the identifier transmitted by the mobile terminal (mobile) to the mobile radio network will be submitted by the mobile radio network to at least one comparison with at least one of the identifiers of the mobile subscriber that are already gathered and administered in a database (DB) of the mobile radio network.

2. A method according to claim 1, **characterized in that** the identifier will by gathered by means of a memory location of a mobile phone subscriber identification module (SIM) as contents of the memory location.

3. A method according to claim 1 or claim 2, **characterized in that** the identifiers of the mobile phone subscriber identification modules (SIM) allocated to the mobile subscriber will be gathered and administrated in the at least one database (DB) of the mobile radio network.

4. A method according to one of the claims 1 to 3, **characterized in that** the total number of the mobile phone subscriber identification modules (SIM) allocated to the mobile subscriber is a component of the respective identifier of a mobile phone subscriber identification module (SIM) or can at least be determined from this one.

5. A method according to one of the claims 1 to 4, **characterized in that** the total number of the mobile phone subscriber identification modules (SIM) allocated to the mobile subscriber is gathered on the respective mobile phone subscriber identification module (SIM) by means of the memory location of the mobile phone subscriber identification module (SIM), which memory location gathers the identifier as contents, and/or by means of the at least one database (DB) of the mobile radio network, preferably within the scope of the manufacture of the mobile phone subscriber identification modules (SIM).

6. A method according to one of the claims 1 to 5, **characterized in that** the identifier is transmitted to a computer unit (OTA, server) of the mobile radio network, which computer unit uses the at least one database (DB) of the mobile radio network.

7. A method according to one of the claims 1 to 6, **characterized in that** the transmission of the identifier will be initiated by means of an application of the mobile phone subscriber identification module (SIM), which application can be carried out by means of the mobile terminal (mobile) and/or by means of the mobile phone subscriber identification module (SIM).

8. A method according to one of the claims 1 to 7, **characterized in that** the transmission of the identifier will be initiated by means of the terminal, preferably automatically, more preferably upon switching on of the mobile terminal (mobile) or upon registering of the mobile terminal at or in the mobile radio network, and/or manually by means of at least one actuation input.

9. A method according to one of the claims 1 to 7, **characterized in that** the transmission of the identifier will be initiated by means of the mobile radio network, preferably by means of a message of a message service of the mobile radio network, which message will be transmitted from the mobile radio network to the mobile terminal (mobile).

10. A method according to one of the claims 1 to 9, **characterized in that** the comparison is carried out by a computer unit (OTA, server) of the mobile radio network, which computer unit uses the at least one database (DB) of the mobile radio network.

11. A method according to one of the claims 1 to 10, **characterized in that** in dependence on the result of the at least one comparison, the identifier of the mobile phone subscriber identification module (SIM) will be modified by means of the mobile phone subscriber identification module (SIM).

12. A method according to claim 11, **characterized in that** within the scope of the modification of the identifier of the mobile phone subscriber identification module (SIM) the modified identifier will be transmitted by the mobile radio network by means of a message of a message service of the mobile radio network to the mobile terminal (mobile) which uses the mobile phone subscriber identification module (SIM) and will be stored by the mobile phone subscriber identification module (SIM), preferably by the memory location of the mobile phone subscriber identification module (SIM) which gathers the identifier as contents.

13. A method according to one of the claims 1 to 12, **characterized by** the following steps carried out on a mobile phone subscriber identification module (SIM) and/or by means of a mobile terminal (mobile) using a mobile phone subscriber identification module (SIM) and being operable in a mobile radio network:
- gathering the identifier of a mobile phone subscriber identification module (SIM),
- sending a message which contains the identifier to a node of the mobile radio network,
- receiving a reply message generated by the mobile radio network in response to the message by a node of the mobile radio network,
- extracting an identifier from the received replay message, and
- storing the extracted identifier on the mobile phone subscriber identification module (SIM).

14. A method according to claim 13, **characterized in that** the identifier of a mobile phone subscriber identification module (SIM) will be gathered by means of reading a memory location of the mobile phone subscriber identification module (SIM), which memory location comprises the identifier as contents, by the mobile terminal.

15. A method according to claim 13 or claim 14, **characterized in that** on the base of the gathered identifier of the mobile phone subscriber identification module (SIM) an individualisation need will be determined by means of the mobile terminal.

16. A method according to claim 15, **characterized in that** the individualisation need will be determined by the mobile terminal on the base of and/or by using the read contents of the memory location of the mobile phone subscriber identification module (SIM).

17. A method according to claim 15 or claim 16, **characterized in that** a message will be sent to a node of the mobile radio network by the mobile terminal in dependence on the determined individualisation need.

18. A method according to claim 17, **characterized in that** the mobile terminal will send the current identifier of the mobile phone subscriber identification module (SIM) together with the message.

19. A method according to one of the claims 13 to 18, **characterized in that** the identifier will be extracted from the received reply message by the mobile terminal in form of a contents that can be stored by the memory location of the mobile phone subscriber identification module (SIM).

20. A method according to one of the claims 13 to 19, **characterized in that** the extracted identifier will be stored by the memory location of the mobile phone subscriber identification module (SIM) which gathers the identifier as contents.

21. A method according to one of the claims 1 to 12,
**characterized by**
the following steps carried out by a node of the mobile radio network and/or by the mobile radio network:
- receiving a message from a mobile terminal (mobile) that can be operated in the mobile radio network,
- generating a reply message comprising an updated identifier and
- sending the reply message to the mobile terminal (mobile).

22. A method according to claim 21, **characterized in that** on the base of the message received from the mobile terminal (mobile) that can be operated in a mobile radio network an individualisation identifier will be determined by the node of the mobile radio network and/or by the mobile radio network, preferably by an OTA server of the mobile radio network.

23. A method according to claim 21 or claim 22, **characterized by** a registration of the total number of the mobile phone subscriber identification modules (SIM) allocated to a mobile subscriber, the registration being provided by the node of the mobile radio network and/or by the mobile radio network, on the base of the identifier and/or by sending a query with respect to the total number of the mobile phone subscriber identification modules (SIM) allocated to a mobile subscriber to a database (DB) and by receiving a reply containing the total number of the mobile phone subscriber identification modules (SIM) allocated to a mobile subscriber.

24. A method according to claim 23, **characterized in that** the query with respect to the total number of the mobile phone subscriber identification modules (SIM) allocated to a mobile subscriber will be sent from the node of the mobile radio network and/or from the mobile radio network to a database (DB) of the mobile radio network.

25. A method according to claim 23 or claim 24, **characterized in that** the query with respect to the total number of the mobile phone subscriber identification modules (SIM) allocated to a mobile subscriber will be sent while using the identifier.

26. A method according to one of the claims 1 to 25, **characterized in that** the identifier enables a verification and/or update of the configuration of the mobile phone subscriber identification module (SIM) used by the mobile terminal (mobile) by means of the mobile radio network for activating functionalities of the mobile terminal (mobile) and/or the mobile phone subscriber identification module (SIM) for using services of the mobile radio network that are available to the mobile subscriber in the mobile radio network.

27. A method according to claim 26, **characterized in that** on the base of the identifier the update status of the mobile phone subscriber identification module (SIM) used by the mobile terminal (mobile) can be determined by at least the mobile radio network.

28. A method according to one of the claims 1 to 27, **characterized in that** the mobile phone subscriber identification modules (SIM) allocated to the mobile subscriber in the mobile radio network comprise identifiers with consecutive numberings.

29. A method according to one of the claims 1 to 28, **characterized in that** the process steps executed by the terminal will be realized by means of an application program that can be carried out by the mobile terminal (mobile) and/or by the mobile phone subscriber identification module (SIM), preferably by means of an applet stored by the mobile phone subscriber identification module (SIM).

30. A method according to one of the claims 1 to 29, **characterized in that** the process steps executed by the mobile radio network will be realized by means of an application program that can be carried out on a computer unit (OTA, server) of the mobile radio network, preferably while using a provisioning server of the mobile radio network.

31. A mobile radio network comprising a cellular network structure composed of radio cells and mobile terminals (mobiles) that can be operated therein, preferably according to the GSM and/or UMTS radio network standard,
**characterized in**
**that** the devices forming the mobile radio network and/or the devices used by this one are configured for executing a method according to one of the claims 1 to 30.

32. A mobile terminal (mobile) for being operated in a mobile radio network, in particular a mobile phone, preferably according to the GSM and/or UMTS radio network standard,
**characterized in**
**that** this one is configured for executing the process steps of a method according to one of the claims 1 to 30, preferably in a mobile radio network according to claim 31, the process steps being executable by means of a mobile terminal (mobile).

33. A mobile terminal (mobile) according to claim 32 comprising a transmitting/receiving device for the communication with the mobile radio network, an input/output unit for the communication with a mobile phone subscriber identification module (SIM) and a control device for controlling and/or coordinating the operation of the mobile terminal (mobile), preferably for controlling and/or coordinating the communication with the mobile radio network and/or the mobile phone subscriber identification module (SIM),
**characterized in**
**that** the input/output unit is configured for reading out and/or describing a memory location of the mobile phone subscriber identification module (SIM) for executing a method according to one of the claims 1 to 30.

34. A mobile terminal (mobile) according to claim 32 or claim 33,
**characterized by**
- a unit for gathering the identifier of a mobile phone subscriber identification module (SIM),
- a unit for determining an individualisation need on the base of the gathered identifier of the mobile phone subscriber identification module (SIM),
- a unit for sending a message to a node of the mobile radio network,
- a unit for receiving a reply message generated by the mobile radio network in response to the message by a node of the mobile radio network,
- a unit for extracting an identifier from the received reply message, and
- a unit for storing the extracted identifier on the mobile phone subscriber identification module (SIM).

35. A mobile phone subscriber identification module (SIM) for the use in a mobile terminal that can be operated in a mobile radio network, preferably according to the GSM and/or UMTS radio network standard,
**characterized in**
**that** this one includes
- means for storing an identifier, which enables a distinguishable identification at least by the mobile radio network, by means of a memory location of the mobile phone subscriber identification module (SIM),
- means for reading the identifier out of the memory location of the mobile phone subscriber identification module (SIM),
- means for initiating the sending of a message comprising the identifier,
- means for receiving a reply message in response to the message,
- means for extracting an identifier, which enables a distinguishable identification at least by the mobile radio network, from the received reply message, and
- means for storing the identifier extracted from the reply message by means of the memory location of the mobile phone subscriber identification module (SIM)
and
**that** it is configured for executing a method according to one of the claims 1 to 30, preferably in a mobile radio network according to claim 31, preferably by means of a mobile terminal (mobile) according to one of the claims 32 to 33.

## Revendications

1. Procédé d'individualisation de modules d'identification d'abonné de téléphone mobile (SIM), qui permettent à un terminal mobile (portable) fonctionnant dans un réseau radio mobile d'avoir un accès au réseau radio mobile, lequel accès authentifie un abonné de téléphone mobile dans le réseau radio mobile, dans lequel au moins deux ou plusieurs modules d'identification d'abonné de téléphone mobile (SIM), qui ont des contenus identiques et qui ne peuvent pas être distingués l'un de l'autre par le réseau radio mobile, sont attribués à l'abonné de téléphone mobile, l'un seulement de ces modules d'identification d'abonné de téléphone mobile (SIM) obtenant un accès au réseau radio mobile pendant des unités de temps coïncidentes, dans lequel les modules d'identification d'abonné de téléphone mobile (SIM) sont chacun munis d'au moins un identifiant par le terminal mobile, lequel identifiant permet une identification distincte des modules d'identification d'abonné de téléphone mobile (SIM) respectifs au moins par le réseau radio mobile,
et
l'identifiant d'un module d'identification d'abonné de téléphone mobile (SIM) est transmis par le terminal mobile (portable) utilisant celui-ci via un message d'un service de messages du réseau radio mobile au réseau radio mobile, dans lequel l'identifiant transmis par le terminal mobile (portable) au réseau radio mobile est soumis par le réseau radio mobile à au moins une comparaison avec au moins un des identifiants de l'abonné de téléphone mobile, qui sont déjà enregistrés et gérés dans une base de données (DB) du réseau radio mobile.

2. Procédé selon la revendication 1, **caractérisé en ce que** l'identifiant est saisi par un emplacement de mémoire d'un module d'identification d'abonné de téléphone mobile (SIM) en tant que contenu de l'emplacement de mémoire.

3. Procédé selon la revendication 1 ou la revendication 2, **caractérisé en ce que** les identifiants des modules d'identification d'abonné de téléphone mobile (SIM) attribués à l'abonné de téléphone mobile sont saisis et gérés dans l'au moins une base de données (DB) du réseau radio mobile.

4. Procédé selon l'une des revendications 1 à 3, **caractérisé en ce que** le nombre total des modules d'identification d'abonné de téléphone mobile (SIM) attribués à l'abonné de téléphone mobile est un composant de l'identifiant respectif d'un module d'identification d'abonné de téléphone mobile (SIM) ou peut au moins être déterminé à partir de celui-ci.

5. Procédé selon l'une des revendications 1 à 4, **caractérisé en ce que** le nombre total des modules d'identification d'abonné de téléphone mobile (SIM) attribués à l'abonné de téléphone mobile est enregistré sur le module d'identification d'abonné de téléphone mobile (SIM) respectif par moyen de l'emplacement de mémoire du module d'identification d'abonné de téléphone mobile (SIM), lequel emplacement de mémoire saisit l'identifiant en tant que contenu, et/ou par moyen de l'au moins une base de données (DB) du réseau radio mobile, de préférence dans le cadre de la fabrication du module d'identification d'abonné de téléphone mobile (SIM).

6. Procédé selon l'une des revendications 1 à 5, **caractérisé en ce que** l'identifiant est transmis à un processeur (OTA, serveur) du réseau radio mobile, lequel processeur utilise l'au moins une base de données (DB) du réseau radio mobile.

7. Procédé selon l'une des revendications 1 à 6, **caractérisé en ce que** la transmission de l'identifiant est initiée par moyen d'une application du module d'identification d'abonné de téléphone mobile (SIM), laquelle application peut être exécutée par moyen du terminal mobile (portable) et/ou par moyen du module d'identification d'abonné de téléphone mobile (SIM).

8. Procédé selon l'une des revendications 1 à 7, **caractérisé en ce que** la transmission de l'identifiant est initiée par moyen du terminal, de préférence automatiquement, de préférence particulière pendant l'allumage du terminal mobile (portable)ou pendant l'enregistrement du terminal mobile (portable) au ou dans le réseau radio mobile et/ou manuellement par moyen d'au moins une entrée d'actionnement.

9. Procédé selon l'une des revendications 1 à 7, **caractérisé en ce que** la transmission de l'identifiant est initiée par moyen du réseau radio mobile, de préférence par moyen d'un message d'un service de messages du réseau radio mobile, lequel message est transmis du réseau radio mobile au terminal mobile (portable).

10. Procédé selon l'une des revendications 1 à 9, **caractérisé en ce que** la comparaison est effectuée par un processeur (OTA, serveur) du réseau radio mobile, lequel processeur utilise l'au moins une base de données (DB) du réseau radio mobile.

11. Procédé selon l'une des revendications 1 à 10, **caractérisé en ce qu'**en fonction du résultat de l'au moins une comparaison, l'identifiant du module d'identification d'abonné de téléphone mobile (SIM) est modifié par moyen du module d'identification d'abonné de téléphone mobile (SIM).

12. Procédé selon la revendication 11, **caractérisé en ce que** dans le cadre de la modification de l'identifiant du module d'identification d'abonné de téléphone mobile (SIM) l'identifiant modifié est transmis par le réseau radio mobile par moyen d'un message du service de messages du réseau radio mobile au terminal mobile (portable), qui utilise le module d'identification d'abonné de téléphone mobile (SIM), et il est stocké par le module d'identification d'abonné de téléphone mobile (SIM), de préférence par l'emplacement de mémoire du module d'identification d'abonné de téléphone mobile (SIM), qui saisit l'identifiant en tant que contenu.

13. Procédé selon l'une des revendications 1 à 12, **caractérisé par** les étapes suivantes effectuées sur un module d'identification d'abonné de téléphone mobile (SIM) et/ou par moyen d'un terminal mobile (portable) utilisant un module d'identification d'abonné de téléphone mobile (SIM) et fonctionnant dans un réseau radio mobile:
- enregistrer l'identifiant d'un module d'identification d'abonné de téléphone mobile (SIM),
- envoyer un message à un nœud du réseau radio mobile, lequel message contient l'identifiant,
- recevoir un message de réponse généré par le réseau radio mobile en réponse au message par un nœud du réseau radio mobile,
- extraire un identifiant dans le message de réponse reçu, et
- stocker l'identifiant extrait sur le module d'identification d'abonné de téléphone mobile (SIM).

14. Procédé selon la revendication 13, **caractérisé en ce que** l'identifiant d'un module d'identification d'abonné de téléphone mobile (SIM) est saisi en lisant un emplacement de mémoire du module d'identification d'abonné de téléphone mobile (SIM), lequel emplacement de mémoire comprend l'identifiant en tant que contenu, par moyen du terminal mobile.

15. Procédé selon la revendication 13 ou la revendication 14, **caractérisé en ce qu'**un besoin d'individualisation est déterminé par moyen du terminal mobile sur la base de l'identifiant saisi du module d'identification d'abonné de téléphone mobile (SIM).

16. Procédé selon la revendication 15, **caractérisé en ce que** le besoin d'individualisation est déterminé par le terminal mobile sur la base du et/ou en utilisant le contenu lu de l'emplacement de mémoire du module d'identification d'abonné de téléphone mobile (SIM).

17. Procédé selon la revendication 15 ou la revendication 16, **caractérisé en ce qu'**un message est envoyé à un nœud du réseau radio mobile par le terminal mobile en fonction du besoin d'individualisation déterminé.

18. Procédé selon la revendication 17, **caractérisé en ce que** le terminal mobile envoie l'identifiant actuel du module d'identification d'abonné de téléphone mobile (SIM) ensemble avec le message.

19. Procédé selon l'une des revendications 13 à 18, **caractérisé en ce que** l'identifiant est extrait dans le message de réponse reçu par le terminal mobile en forme d'un contenu qui est susceptible d'être stocké par l'emplacement de mémoire du module d'identification d'abonné de téléphone mobile (SIM).

20. Procédé selon l'une des revendications 13 à 19, **caractérisé en ce que** l'identifiant extrait est stocké par l'emplacement de mémoire du module d'identification d'abonné de téléphone mobile (SIM), qui enregistre l'identifiant en tant que contenu.

21. Procédé selon l'une des revendications 1 à 12,
**caractérisé par**
les étapes suivantes effectuées par un nœud du réseau radio mobile et/ou par le réseau radio mobile:
- recevoir un message d'un terminal mobile (portable) fonctionnant dans le réseau radio mobile,
- générer un message de réponse comprenant un identifiant actualisé et
- envoyer le message de réponse au terminal mobile (portable).

22. Procédé selon la revendication 21, **caractérisé en ce que** sur la base du message reçu du terminal mobile (portable) fonctionnant dans le réseau radio mobile un identifiant d'individualisation est déterminé par le nœud du réseau radio mobile et/ou par le réseau radio mobile, de préférence par un serveur OTA du réseau radio mobile.

23. Procédé selon la revendication 21 ou la revendication 22, **caractérisé par** un enregistrement du nombre total des modules d'identification d'abonné de téléphone mobile (SIM) attribués à un abonné de téléphone mobile, l'enregistrement étant prévu par le nœud du réseau radio mobile et/ou par le réseau radio mobile, sur la base de l'identifiant et/ou en envoyant une demande par rapport au nombre total des modules d'identification d'abonné de téléphone mobile (SIM) attribués à un abonné de téléphone mobile à une base de données (DB) et en recevant une réponse, qui contient le nombre total des modules d'identification d'abonné de téléphone mobile (SIM) attribués à un abonné de téléphone mobile.

24. Procédé selon la revendication 23, **caractérisé en ce que** la demande par rapport au nombre total des modules d'identification d'abonné de téléphone mobile (SIM) attribués à un abonné de téléphone mobile est envoyée par le nœud du réseau radio mobile et/ou par le réseau radio mobile à une base de données (DB) du réseau radio mobile.

25. Procédé selon la revendication 23 ou la revendication 24, **caractérisé en ce que** la demande par rapport au nombre total des modules d'identification d'abonné de téléphone mobile (SIM) attribués à un abonné de téléphone mobile est envoyée en utilisant l'identifiant.

26. Procédé selon l'une des revendications 1 à 25, **caractérisé en ce que** l'identifiant permet une vérification et/ou une actualisation de la configuration du module d'identification d'abonné de téléphone mobile (SIM) utilisé par le terminal mobile (portable) par moyen du réseau radio mobile pour activer des fonctionnalités du terminal mobile (portable) et/ou du module d'identification d'abonné de téléphone mobile (SIM) pour utiliser des services du réseau radio mobile, qui sont à la disposition de l'abonné de téléphone mobile dans le réseau radio mobile.

27. Procédé selon la revendication 26, **caractérisé en ce que** sur la base de l'identifiant il est possible de déterminer l'état d'actualisation du module d'identification d'abonné de téléphone mobile (SIM) utilisé par le terminal mobile (portable) par moyen d'au moins le réseau radio mobile.

28. Procédé selon l'une des revendications 1 à 27, **caractérisé en ce que** les modules d'identification d'abonné de téléphone mobile (SIM) attribués à l'abonné de téléphone mobile dans le réseau radio mobile comprennent des identifiants ayant des numérotations consécutives.

29. Procédé selon l'une des revendications 1 à 28, **caractérisé en ce que** les étapes de procédé exécutées par le terminal sont réalisées par moyen d'un programme d'application, qui peut être exécutée par le terminal mobile (portable) et/ou par le module d'identification d'abonné de téléphone mobile (SIM), de préférence par moyen d'un applet mémorisé par le module d'identification d'abonné de téléphone mobile (SIM).

30. Procédé selon l'une des revendications 1 à 29, **caractérisé en ce que** les étapes de procédé exécutées par le réseau radio mobile sont réalisées par moyen d'un programme d'application, qui peut être exécutée sur un processeur (OTA, serveur) du réseau radio mobile, de préférence en utilisant un serveur de provisionnement du réseau radio mobile.

31. Réseau radio mobile comprenant une structure de réseau cellulaire composée de cellules radio et des terminaux mobiles (portables) fonctionnant dans celui-ci, de préférence selon le standard de réseau radio GSM et/ou UMTS,
**caractérisé en ce que**
les dispositifs, qui forment le réseau radio mobile et/ou les dispositifs utilisés par celui-ci sont configurés pour exécuter un procédé selon l'une des revendications 1 à 30.

32. Terminal mobile (portable) destiné au fonctionnement dans un réseau radio mobile, notamment un téléphone mobile, de préférence selon le standard de réseau radio GSM et/ou UMTS,
**caractérisé en ce que**
celui-ci est configuré pour exécuter les étapes de procédé d'un procédé selon l'une des revendications 1 à 30, de préférence dans un réseau radio mobile selon la revendication 31, les étapes de procédé pouvant être exécutées par moyen d'un terminal mobile (portable).

33. Terminal mobile (portable) selon la revendication 32, comprenant un dispositif émetteur/récepteur pour la communication avec le réseau radio mobile, une unité d'entrée/de sortie pour la communication avec un module d'identification d'abonné de téléphone mobile (SIM) et un dispositif de commande pour commander et/ou coordonner le fonctionnement du terminal mobile (portable), de préférence pour la commande et/ou la coordination de la communication avec le réseau radio mobile et/ou avec le module d'identification d'abonné de téléphone mobile (SIM),
**caractérisé en ce que**
l'unité d'entrée/de sortie est configurée pour lire et/ou pour décrire un emplacement de mémoire du module d'identification d'abonné de téléphone mobile (SIM) pour exécuter un procédé selon l'une des revendications 1 à 30.

34. Terminal mobile (portable) selon la revendication 32 ou la revendication 33, **caractérisé par**
- une unité destinée à enregistrer l'identifiant d'un module d'identification d'abonné de téléphone mobile (SIM),
- une unité destinée à déterminer un besoin d'individualisation sur la base de l'identifiant enregistré du module d'identification d'abonné de téléphone mobile (SIM),
- une unité destinée à envoyer un message à un nœud du réseau radio mobile,
- une unité destinée à recevoir une message de réponse généré par le réseau radio mobile en réponse au message par un nœud du réseau radio mobile,
- une unité destinée à extraire un identifiant dans le message de réponse reçu, et
- une unité destinée à stocker l'identifiant extrait sur le module d'identification d'abonné de téléphone mobile (SIM).

35. Module d'identification d'abonné de téléphone mobile (SIM) pour l'utilisation dans un terminal mobile fonctionnant dans un réseau radio mobile, de préférence selon le standard de réseau radio GSM et/ou UMTS,
**caractérisé en ce que**
celui-ci comprend
- des moyens pour stocker un identifiant, qui permet une identification distincte au moins par le réseau radio mobile, par moyen d'un emplacement de mémoire du module d'identification d'abonné de téléphone mobile (SIM),
- des moyens pour lire l'identifiant dans l'emplacement de mémoire du module d'identification d'abonné de téléphone mobile (SIM),
- des moyens pour initier l'envoi d'un message comprenant l'identifiant,
- des moyens pour recevoir un message de réponse en réponse au message,
- des moyens pour extraire un identifiant, qui permet une identification distincte au moins par le réseau radio mobile, dans le message de réponse reçu, et
- des moyens pour stocker l'identifiant extrait dans le message de réponse par moyen de l'emplacement de mémoire du module d'identification d'abonné de téléphone mobile (SIM)
et
qui est configuré pour exécuter un procédé selon l'une des revendications 1 à 30, de préférence dans un réseau radio mobile selon la revendication 31, de préférence à l'aide d'un terminal mobile (portable) selon l'une des revendications 32 à 33.
